# EUROPEAN PATENT SPECIFICATION

(11) **EP 0 436 109 B1**
(45) Date of publication and mention of the grant of the patent: **17.04.1996**
(21) Application number: 90122327.1
(22) Date of filing: 22.11.1990
(51) Int. Cl.: G11B 15/473

(54) **Controller for a rotary drum**
Kopftrommelsteuervorrichtung
Dispositif de commande d'un tambour rotatif

(30) Priority: 30.12.1989 JP 340268/89
(43) Date of publication of application: 10.07.1991
(73) Proprietor: SONY CORPORATION, Tokyo (JP)
(72) Inventor: Yamada, Makoto, Shinagawa-ku, Tokyo (JP); Noguchi, Masayoshi, Shinagawa-ku, Tokyo (JP); Ono, Junji, Shinagawa-ku, Tokyo (JP); Takahashi, Toshihiko, Shinagawa-ku, Tokyo (JP)
(74) Representative: TER MEER - MÜLLER - STEINMEISTER & PARTNER

(56) References cited:
- EP-A- 0 326 255
- DE-A- 2 922 816
- GB-A- 981 754
- US-A- 3 038 104
- US-A- 4 216 419
- PATENT ABSTRACTS OF JAPAN vol. 13, no. 203 (P-870)15 May 1989 & JP-A-01 023 453
- PATENT ABSTRACTS OF JAPAN vol. 11, no. 299 (P-621)29 September 1987 & JP-A-62 092 172

## Description

### Background of the Invention

The invention pertains to a controller for a rotary drum according to the precharacterizing part of claim 1, said controller being applicable, for example, to a rotary digital audio tape recorder having a rotary drum carrying heads. A controller according to the precharacterizing parts of claim 1 is described in JP-A-102 3453.

A rotary digital audio tape recorder (DAT) is known as a high density tape recorder capable of recording audio signals with high information density.

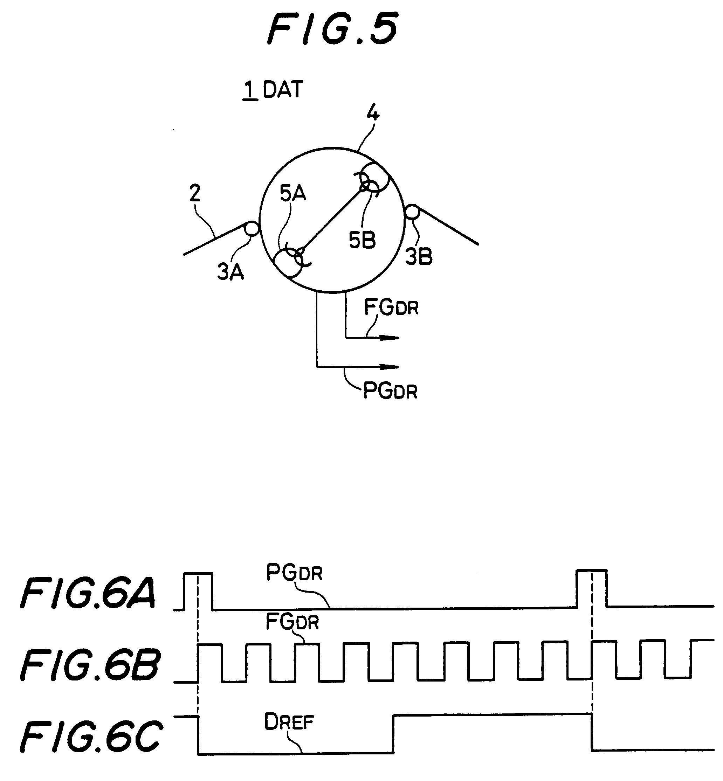

Fig. 5 shows a rotary drum 4 of such DAT designated by 1. A magnetic tape 2 recorded with DAT formatted audio data is unrolled from a supply reel of a tape cassette (not shown). The tape 2 is bent by predetermined angle along a slanting surface of the rotary drum 4 while guided by a pair of oblique guides 3A and 3B. The drum 4 carries a pair of rotary heads 5A and 5B which are spaced 180° apart from each other and have different azimuth angles relative to the tape 2. Each head scans an oblique track of the tape 2 as the drum 4 rotates. Having passed the rotary drum 4, the tape 2 is rolled up onto a take-up reel of the tape cassette by way of a capstan and a pinch roller.

DAT 1 uses the rotary heads 5A and 5B to record and produce audio data to and from the magnetic tape 2.

A drum frequency signal FGDR indicative of the rotational speed of the rotary drum 4 and a drum phase signal PG_{DR} indicative of a predetermined phase of the rotary heads 5A and 5B relative to the magnetic tape 2 are provided to a rotary drum controller of DAT 1 which controls speed and phase of the rotary drum 4. For example, the drum phase signal PGDR is arranged to occur when one of the heads reaches an edge of the tape 2.

The drum controller controls the phase of the rotary drum 4 by minimizing the phase difference formed between the drum phase signal PGDR (Fig. 6A) and a phase reference signal PREP (Fig. 6C) that is used for timing recording/playback operations of an internal signal processing LSI of. DAT 1.

Further, the drum controller controls the speed of the rotary drum 4 by measuring a period of the drum frequency signal FG_{DR} (Fig. 6B) and converting the difference between the measured period and a reference period to a voltage to drive a drum motor.

It should be noted, however, that the drum phase signal PG_{DR} occurs only once a one complete revolution of the rotary drum 4. Because the drum controller stated above controls the phase of the rotary heads 5A and 5B based on the drum phase signal PG_{DR}, it can change the phase of the rotary heads only once per one complete revolution of the rotary drum. Therefore, a relatively long time is required to establish the desired phase relation (synchronism) of the drum phase signal PG_{DR} with the phase reference signal D_{REF}.

This problem is particularly significant when a muted condition is released to initiate recording. Slow response of recording by DAT 1 often makes a user anxious or nervous.
The invention successfully overcomes the problem. The invention provides an improved controller for a rotary drum that is simple in structure and can control the rotary drum phase with higher accuracy.

The controller for controlling a rotary head disclosed in JP-A-1 023 453 corresponding to the precharacterizing part of claim 1 includes a rotary head in which an FG-detection signal is obtained at a position dividing equally one revolution of the rotary drum. In other words, the FG-detection signal is occurring periodically and repeatedly per one revolution of the rotary drum. The FG-detection signals count up a first counter. A second counter is upwardly incremented by a FG reference signal which is based on a PG reference signal. The FG reference signal has a frequency which is 24 times more than the frequency of the PG reference signal. A comparator compares the counting output data of the first and second counters and delivers the result to a phase comparator comparing the phases of the FG signal with the phases of the FG reference signal for phase locking a drum motor in response to a phase error. Thereby, the response speed is improved.

JP-A-62 092 172 discloses the principal that a higher number of FG pulses is generated by one revolution of a disk drive motor so that a phase-locked loop with high accuracy is obtained.

### Summary of the Invention

A controller for a rotary drum, said controller being arranged to receive:
(a) a drum frequency signal that occurs periodically in synchronism with the rotation of the rotary drum a predetermined plurality of times during one revolution of the rotary drum,
(b) a drum phase signal that occurs once per one revolution when said rotary drum passes a predetermined angular phase,
(c) a phase reference signal (D_{REF}) for said drum phase signal (PG_{DR}), in which said controller (10) is further arranged to send a drum control signal (S_{DR}) to a driver (43) for driving the rotary drum (11)
is, according to the invention, **characterized in that** said controller comprises :
- a period reference providing means (in 40) for providing data of a period reference for said drum frequency signal;
- drum frequency signal occurrence time measuring means for successively measuring occurrence times of said drum frequency signal;
- phase reference signal occurrence time measuring means for successively measuring occurrence times of said phase reference signal;
- drum frequency signal period measuring means coupled to said drum frequency signal occurrence time measuring means for measuring a plurality of actual periods of said drum frequency signal each period being determined by the respective time differences between said sequentially measured occurrence times of said drum frequency signal;
- speed error computing means coupled to said drum frequency signal period measuring means and said period reference providing means for computing a plurality of speed errors each determined by the difference between the period reference and a different one of said measured periods of said drum frequency signal; divisional time determining means coupled to said phase reference signal occurrence time measuring means and said period reference providing means for adding successive integer times of said period reference to said occurrence times of said phase reference signal to determine a plurality of divisional times defining desired occurrence times of the drum frequency signal;
- phase error computing means coupled to said drum frequency signal occurrence time measuring means, said divisional time determining means and said drum phase signal for computing a plurality of phase errors, each determined by the difference between a measured occurrence time of said drum frequency signal and an associated divisional time; and
- control signal updating means coupled to said speed error computing means and said phase error computing means for updating said drum control signal based on each of said speed errors and each of said phase errors.

Depending claims 2 to 4 are each specifying advantageous developments thereof.

This arrangement provides much faster response of phase control than achieved by the prior art rotary drum controller which controls the rotary drum phase based on a drum phase signal occurring only once a one complete revolution of the rotary drum.

### Brief Description of the Drawings

Fig. 1 is a block diagram of a rotary drum controller of DAT in accordance with the invention;
Fig. 2 is a block diagram of the measuring circuit in Fig. 1;
Figs. 3A to 3F are timing charts of signals in the arrangement of Fig. 1;
Fig. 4 shows an overall arrangement of DAT;
Fig. 5 is a schematic diagram of a rotary drum of DAT; and
Figs. 6A to 6C are timing charts of signals associated with the rotary drum.

### Detailed Description of the Preferred Embodiment

The description first reviews an overall arrangement of a rotary DAT and then takes up a rotary drum controller incorporating features of the invention.

### <Overall Arrangement of DAT>

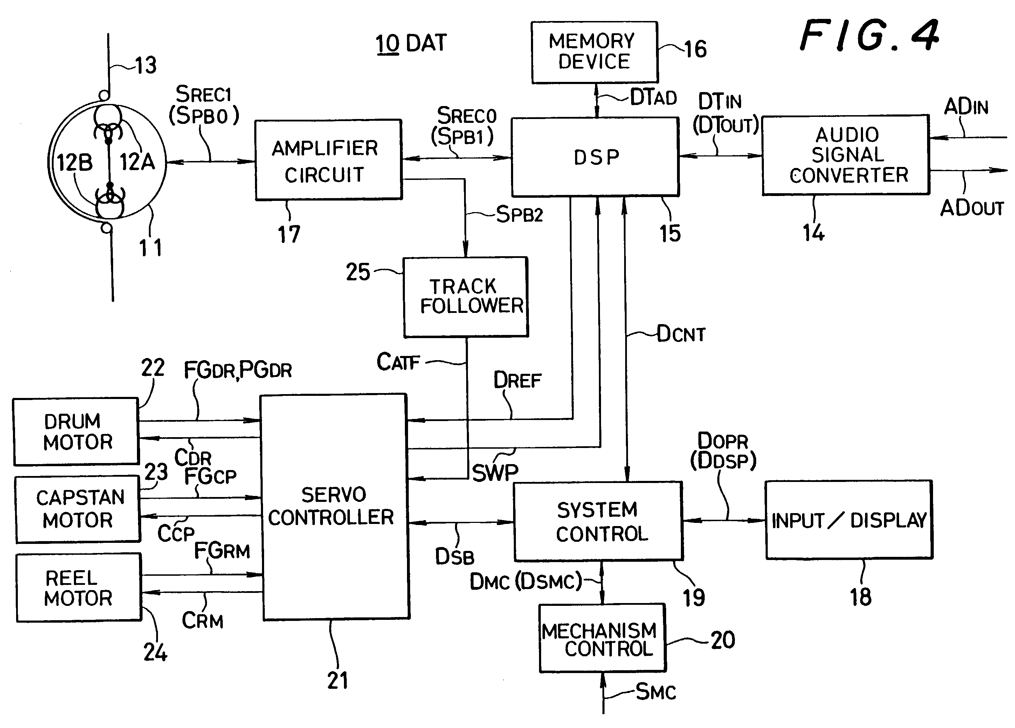

Fig. 4 shows an overall arrangement of a rotary head digital audio tape recorder (DAT) generally designated by 10. DAT 10 uses rotary heads 12A and 12B supported on a rotary drum 11 to record and reproduce an audio signal designated by AD_{IN} (input) and AD_{OUT} (output) to and from a magnetic tape 2 running along a surface of the rotary drum 4 covering a predetermined angle.

In the recording mode of DAT 10, an analog audio input signal AD_{IN} is supplied to an audio signal converter 14. The recording system of the audio signal converter 14 comprises a low pass filter and an analog-to-digital converter. The audio signal converter 14 converts the analog audio input signal AD_{iN} to a corresponding digital signal DT_{IN} and supplies it to a digital signal processor (DSP) 15.

The recording system of DSP 15 receives the digital audio data DT_{IN} and firstly writes the same (audio input data DT_{AD}) into a memory device 16 of a random access memory (RAM).

The recording system of DSP 15 comprises an error-correcting code generator, an interleaving device, 8 - 10 modulator and parallel-serial converter.

Then, the error-correcting code generator reads the audio input data DT_{AD} from the memory device 16, generates error-correcting codes and writes same into the memory device 16.

All reading and writing operations of the memory device 16 are carried out at interleaved addresses generated by the interleaving device.

The audio input data DT_{AD} with error-correcting codes are read out by 8 - 10 modulator. The 8 - 10 modulator converts each 8 bit audio input data to a 10 bit data suitable for magnetic recording by rotary heads 12A and 12B while adding a synchronous signal, address signal, subcode signal and automatic track following (ATF) signal.

The resultant recording data are converted by the parallel-serial converter to a serial recording signal S_{REC0} which is then supplied to a recording/playback amplifier circuit 17.

The recording system of the amplifier circuit 17 comprises a recording signal amplifier and a rotary transformer. The amplified recording signal S_{REC1} from the recording signal amplifier is supplied through the rotary transformer to the rotary heads 12A and 12B on the rotary drum 11.

In this manner, the audio input signal AD_{IN} is processed and recorded on tracks of the magnetic tape 13.

A system control 19 in a microcomputer form selects the recording or playback mode of DAT 10 in response to console data supplied from an input/display device 18.

The input/display device 18 may comprise a microcomputer having a key matrix as a operator's input means and a display panel of liquid crystal display (LCD) elements as a visual display means.

In response to an operator's input, the input/display device 18 produces and supplies console data D_{OPR} to the system control 19. Also the input/display device 18 controls the display on the display panel according to display data D_{DSP} from the system control 19.

In the recording mode, based on predetermined system information and console data D_{OPR} from the input/display device 18, the system control 19 produces and supplies mechanism control data D_{MC}, signal processing control data D_{CNT} and servo control data D_{SB} to a mechanism control 20, DSP 15 and servo controller 21, respectively.

During recording, based on the servo control data D_{SB}, the servo controller 21 supplies a drum drive signal C_{DR}, capstan drive signal C_{CP} and reel drive signal C_{RM} to a drum motor 22, capstan motor 23 and reel motor 24, respectively, to rotate the rotary drum 11 at the desired speed and to feed the magnetic tape 13 at the desired speed.

In response to this, the drum motor 22 (drum sensor) feeds a drum phase signal PG_{DR} and a drum frequency signal FG_{DR} back to the servo controller 21; the capstan motor 23 (capstan speed sensor) supplies a capstan frequency signal FG_{CP} to the servo controller 21; and the reel motor 24 (reel speed sensor) supplies a reel frequency signal IG_{RM} to the servo controller 21. In this manner, the respective speed and/or phase servo systems are formed.

During recording, the servo controller 21 receives from DSP 15 a phase reference signal D_{REF}, indicative of a one interleave period in DSP 15. The servo controller 21 uses the phase reference signal D_{REF} to perform speed and/or phase servo functions. Further, the servo controller 21 produces a head change signal SWP from the drum phase signal PG_{DR} and the drum frequency signal FG_{DR} and supplies same to DSP 15.

The system control 19 sends mechanism control data D_{MC} to the mechanism control 20. Based on the mechanism control data D_{MC}, the mechanism control 20 drives mechanisms such as DAT cassette loading mechanism and magnetic tape loading mechanism. These mechanisms send their sensor information S_{MC} back to the mechanism control 20. From the sensor information S_{MC} the mechanism control 20 produces and sends mechanism data D_{SMC} to the system control 19.

In the playback mode of DAT 10, the servo controller 21 drives the drum motor 22 to rotate at a speed related with servo control data D_{SB} from the system control 19 and synchronizes the drum motor 22 with a recording phase reference signal D_{REF} from DSP 15 to form a speed and phase servo.

Under the circumstances a playback signal S_{PB0} is picked up by the rotary heads 12A and 12B and supplied to the amplifier circuit 17. The playback system of the amplifier circuit 17 comprises a rotary transformer, playback signal amplifier, wave form equalizer and binary circuit. From the playback signal S_{PB0} the amplifier circuit 17 produces and supplies an amplified playback signal S_{PB2} to a track follower 25. Further, the amplifier circuit 17 digitizes the amplified playback signal by the binary circuit and supplies the resultant digital playback signal S_{PB1} to the playback system of DSP 15.

The track follower 25 is designed to provide tracking control by using an synchronous signal and an ATF pilot signal having been recorded in a recording track on the magnetic tape 13.

To this end the track follower 25 comprises an equalizer for detecting a synchronous signal and an ATF envelope detector. When detecting a synchronous signal from the playback signal, the track follower 25 detects an ATF signal from the envelope signal. From the detected ATF signal the track follower 25 produces an ATF control signal C_{ATF} and sends it to the servo controller 21.

In response to the ATF control signal C_{ATF} the servo controller 21 drives the capstan motor 23 in such a manner that each head 12A, 12B keeps track of proper recording tracks on the magnetic tape 13, accomplishing the desired ATF servo.

Under the circumstances the playback system of DSP 15 performs playback operations on the incoming signal S_{PB1}.

The playback system of DSP 15 includes a phase locked loop (PLL) clock recovery circuit, 10 - 8 demodulator, error-detecting and correcting circuit, de-interleaving circuit and an interpolator.

First, the clock recovery circuit recovers a clock signal from the digital playback signal S_{PB1}.

Each time the 10-8 demodulator detects a synchronous signal from the digital playback signal S_{PB1}, it demodulates the 10 bit digital playback data S_{PB1} to 8 bit audio data DT_{AD} by using clock signals from the clock recovery circuit. The resultant audio data DT_{AD} are successively written into the memory device 10.

Then the error-detecting and correcting circuit reads the audio data DT_{AD} from the memory device 16 to see if there is an error. when an error is formed, the error-detecting and correcting circuit corrects the audio data DT_{AD} by using the error correcting code contained in it, and writes into the memory device 16 the corrected audio data together with a flag indicative of success/failure of the correction.

All reading and writing operations of the memory device 16 are carried out at de-interleaved addresses generated by the de-interleaving circuit.

Then the interpolator reads the audio data DT_{AD} from the memory device 16 and performs interpolation (error concealment) for those audio data (error data) that were not successfully corrected by the error-detecting and correcting circuit. The interpolation may be mean value interpolation that replaces error data with the averaged value of its preceding and succeeding audio data. The resultant audio data are supplied as reproduced digital data DT_{OUT} to the playback system of the audio signal converter 14.

The playback system of the audio signal converter 14 comprises a digital-analog converter and a low pass filter. By the conversion of the audio signal converter 14, an analog audio signal AD_{OUT} is produced.

In this manner, audio data recorded on the magnetic tape 13 are read by the rotary heads 12A and 12B on the rotary drum 22, processed and reproduced as an analog audio signal AD_{OUT}.

### <Rotary Drum Controller>

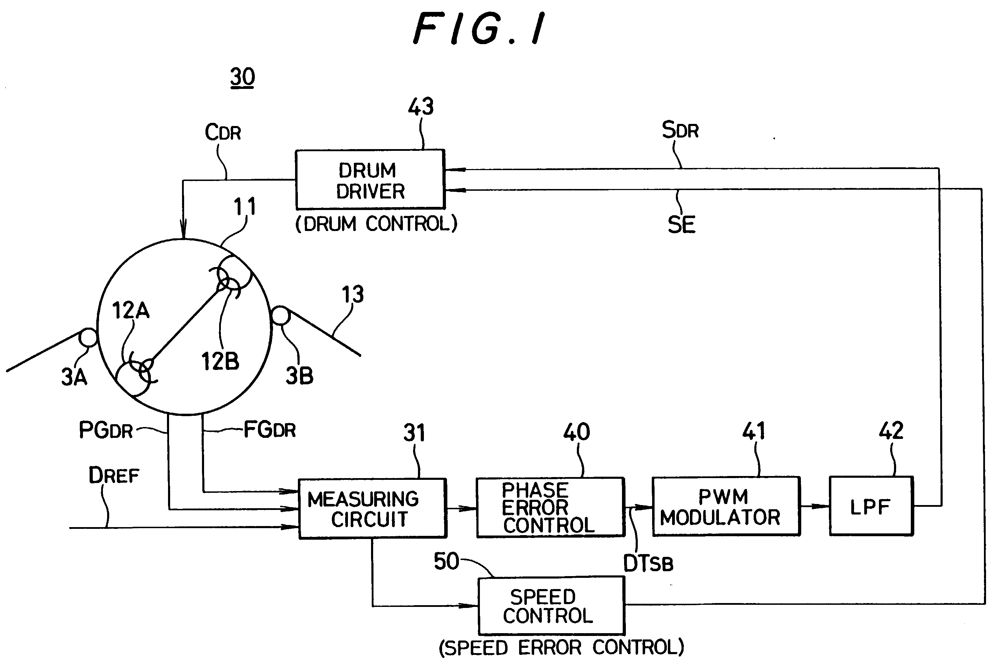

Fig. 1 shows a rotary drum controller of DAT generally designated by 30 in accordance with the invention. In Figs. 1, 4 and 5, corresponding components are designated by same reference symbols. The rotary drum controller 30 may form part of the servo controller 21 in Fig. 4. The rotary drum controller 30 comprises a measuring circuit 31 a phase and speed control 40, a pulse width modulation (PWM) modulator 41, a low pass filter 42 and a drum driver 43.

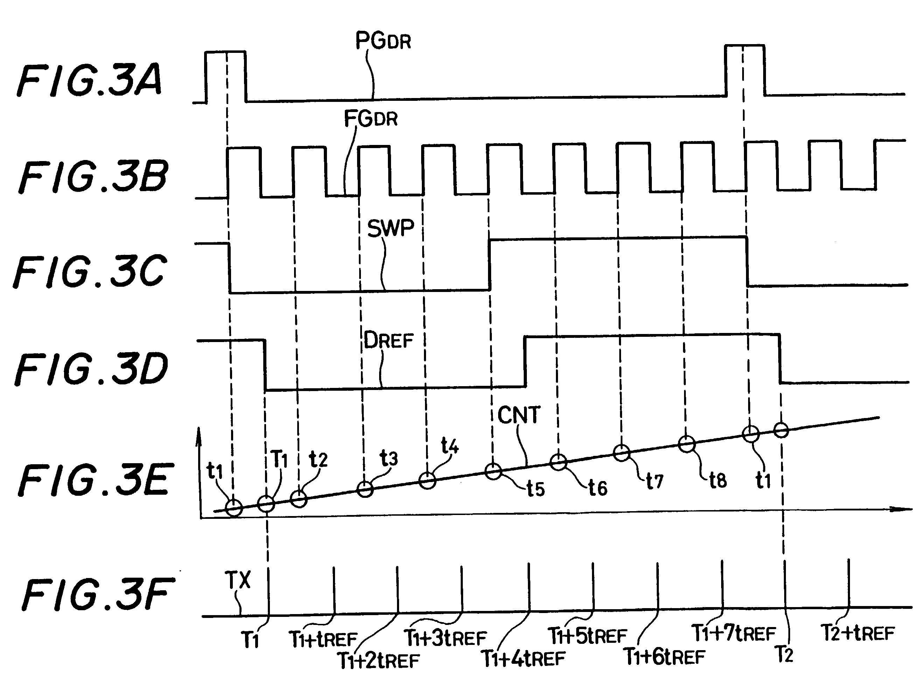

The measuring circuit 31 receives the drum phase signal PG_{DR} (Fig. 3A) and the drum frequency signal FG_{DR} (Fig. 3B) from sensors of the rotary drum 11, and also receives the phase reference signal D_{REF} (Fig. 3D) from DSP 15.

It should be recalled that (a pulse of) the drum phase signal PG_{DR} occurs once a one complete revolution of the rotary drum 11 when the rotary drum 11 passes a predetermined angular phase (e.g., when one of the heads 11A and 12A reaches an edge of the magnetic tape 13 on the rotary drum 11). On the other hand, (an edge of) the drum frequency signal FG_{DR} repeatedly and periodically occurs during one revolution of the rotary drum 11.

The phase reference signal D_{REF} is used in DSP 15 for its internal signal processing while in the rotary drum controller 30, the phase reference signal D_{REF} is used as the desired phase reference with which the drum phase signal PG_{DR} should synchronize.

Therefore, the rotary drum 11 includes drum frequency signal generating means for generating a drum frequency signal that occurs each time the rotary drum rotates by a predetermined fractional (e.g., 1/N) revolution. The rotary drum 11 also includes drum phase signal generating means for generating a drum phase signal that occurs each time the rotary drum passes a predetermined angular phase. It is important that the drum frequency signal has a frequency higher than that of the drum phase signal. DSP 15 includes phase reference signal generating means for generating a phase reference signal for the drum phase signal.

The function of the measuring circuit 31 is to measure occurrence times of the drum frequency signal FG_{DR} and the phase reference signal D_{REF}.

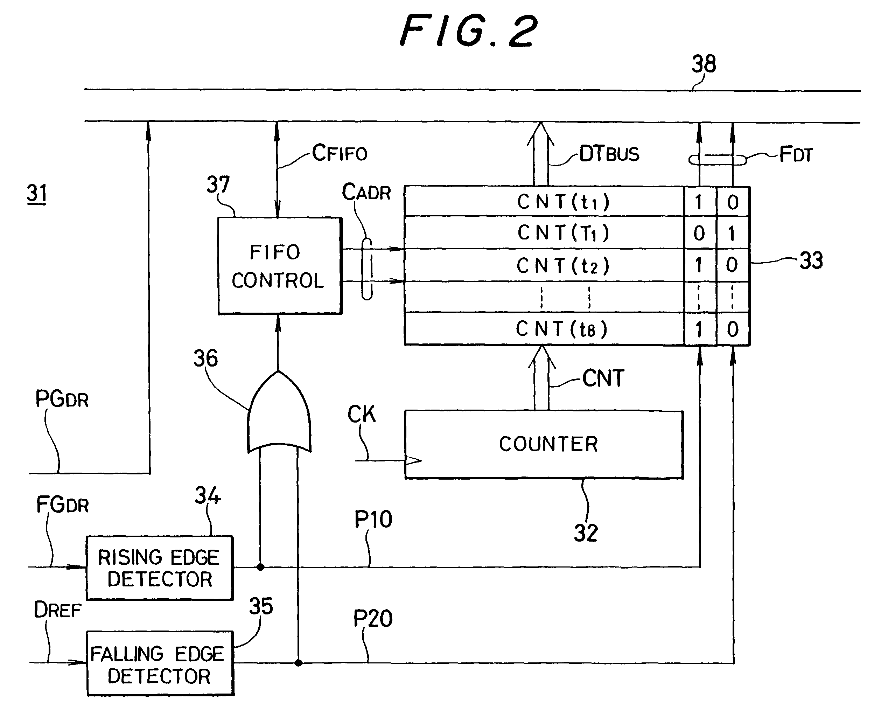

Fig. 2 shows a block diagram of the measuring circuit 31. The measuring circuit 31 is implemented by a microcomputer which includes a counter 32 and a first-in first-out (FIFO) memory 33 of a predetermined number of words.

The counter 32 is a free running counter that counts clocks CK having a predetermined high frequency.

A rising edge detector 34 receives the drum frequency signal FG_{DR} and detects a rising edge of it. A falling edge detector 35 receives the phase reference signal D_{REF} to detect a falling edge of it. A pulse P 10 from the rising edge detector 34 indicative of a rising edge of the drum frequency signal FG_{DR}, and a pulse P20 from the falling edge detector 35 indicative of a falling edge of the phase reference signal D_{REF} are passed through an OR gate 36 to a FIFO control 37.

In response to either pulse P10, P20, the FIFO control 37 addresses (C_{ADR}) the FIFO memory 33 to store count data CNT from the counter 32. Note that this count data CNT indicates either an occurrence time of (a rising edge of) the drum frequency signal FG_{DR} or an occurrence time of (a falling edge of) the phase reference signal D_{REF}.

To differentiate between count data of the drum frequency signal FG_{DR} and that of the phase reference signal D_{REF}, the lowest two bits of each word in the FIFO memory 33 are used to store outputs from the edge detectors 34.and 35 as an ID flag F_{DT}. For the count data of the drum frequency signal, the lowest two bits are set to "10". For the count data of the phase reference signal, the lowest two bits are set to "01".

In this manner, the FIFO memory 43 sequentially stores count data CNT such as CNT (t₁), CNT (T₁), CNT (t₂) CNT (t₃) and so on (Fig. 3E), together with the ID flags. It is understood that the measuring circuit 31 includes drum frequency signal occurrence time measuring means coupled to the drum frequency signal generating means for measuring occurrence times of the drum frequency signal. Also the measuring circuit 31 includes reference phase signal occurrence time measuring means coupled to the reference phase signal generating means for measuring an occurrence time of the reference phase signal.

The count data CNT stored in the FIFO memory 31 are read out (DT_{BUS}, F_{DT}) to the phase and speed control 40 through an internal bus 38 based on FIFO control data from the FIFO control 37. Also the drum phase signal PG_{DR} is supplied to the phase and speed control 40 by way of the internal bus 38.

The phase and speed control 40 basically comprises a head change signal generating module, a speed error computing module, a phase error computing module and a drum·control data generating module. the phase and speed control 40 monitors the drum phase signal PG_{DR} to detect a rising edge of it. When it detects a rising edge, the phase and speed control 40 starts to examine the count data CNT from the FIFO memory 33.

The head change signal generating module generates the head change signal SWP from the drum frequency signal DREF and the drum phase signal PGDR. In the case of Figs. 3C, the head change signal SWP falls at a (reference) rising edge of the drum frequency signal FG_{DR} that occurs during a high level period of the drum phase signal PG_{DR}. (i.e., occurs immediately after a rising edge of the drum phase signal PG_{DR}). The head change signal SWP rises at another rising edge of the drum frequency signal FG_{DR}, that occurs fifth counting from the reference rising edge.

The speed error computing module computes speed error data. More specifically, the speed error computing module reads those count data CNT from the FIFO memory 33 indicative of successive occurrence times of the drum frequency signal FG_{DR}. From the successive occurrence times t₁, t₂, t₃ ....., the speed error computing module measures the actual period of the drum frequency signal FGDR which is given by (t₂-t₁), (t₃-t₂) and so on. Then the speed error generating module calculates the difference (speed error) between each actual period data and period reference data t_{REF}.

It should be noted that the reference period data t_{REF} indicates the desired period of the drum frequency signal FG_{DR}, and therefore defines the desired speed of the rotary drum 11. The reference period data t_{REF} is initially set in the phase and speed control 40. Thus the system includes period reference providing means for providing data of a period reference for the drum frequency signal.

The speed error data from the speed error computing module are used to control the rotary drum 11 to rotate at the desired speed determined by the period reference data t_{REF}.

The phase error computing module computes phase error data in a manner described later in accordance with the invention. The phase error data are used to synchronize the rotary drum 11 with the phase reference signal D_{REF}. In other words, the phase of the rotary drum 11 is controlled based on the phase error data.

The drum control data generating module generates drum control data DT_{SB} based on the speed error data from the speed error generating module and the phase error data from the phase error generating module.

The drum control data DT_{SB} are supplied to PWM modulator 41. The PWM modulator 41 converts the drum control data DT_{SB} to a corresponding PWM modulated signal. The low pass filter (LPF) 42 smooths the PWM modulated signal to produce a smoothed control signal S_{DR}. The drum driver 43 receives the control signal S_{DR} and supplies a corresponding drive signal C_{DR} to the drum motor.

The phase error computing module of the phase and speed control 40 incorporates features of the invention.

It is appropriate here to describe the prior art phase error computing module. The prior art phase error computing module computes the phase error ΔT₁ by:${\text{ΔT}}_{\text{1}} {\text{= t}}_{\text{1}} {\text{-T}}_{\text{1}} {\text{, t}}_{\text{1}} {\text{-T}}_{\text{2}}$ in which the first t₁ is an occurrence time of the drum phase signal PG_{DR} (measured at a rising edge of the drum frequency signal FG_{DR} that occurs during a high level period of the drum phase signal PG_{DR}) and indicates first when the rotary drum 11 passes a predetermined angular phase, the second t₁ is the next drum phase signal occurrence·time after one complete revolution of the rotary drum 11, T₁ indicates a first occurrence time of the phase reference signal D_{REF}, and T₂ indicates a second occurrence time of the phase reference signal D_{REF}. As noted, the prior art phase error computing module computes only a single phase error per one revolution of the rotary drum 11 or per one period of the drum phase signal PG_{DR}. Each time a phase error is computed, the rotary drum controller uses it to update drum control data DT_{SB} for phase control of the rotary drum 11. This updating occurs only once an one complete revolution of the rotary drum 11. As a result, the prior art rotary drum controller shows slow response of the phase control and requires a relatively long time to establish synchronism of the rotary drum 11 with the phase reference signal D_{REF}.

In contrast, the rotary drum controller of the invention can establish, in a shorter time, the desired synchronism between the rotary drum 11 and the phase reference signal D_{REF}.

The updating of the drum control data DT_{SB} for the phase control of the rotary drum 11 occurs a plurality of times per one revolution of the rotary drum 11, i.e., as many times as the number of the occurrences of the drum frequency signal FG_{DR} (e.g., 8 occurrences in Fig. 3) during a one period of the drum phase signal PG_{DR}. This advantage is primarily derived from a novel manner of computing phase errors.

In accordance with the invention, the phase error computing module of the phase and speed control 40 computes phase errors ΔT₂ as follows:${\text{ΔT}}_{\text{2}} {\text{= t}}_{\text{1}} {\text{-T}}_{\text{1}} {\text{, t}}_{\text{2}} {\text{-(T}}_{\text{1}} {\text{+t}}_{\text{REF}} {\text{), t}}_{\text{3}} {\text{-(T}}_{\text{1}} {\text{+2t}}_{\text{REF}} {\text{), ....., t}}_{\text{n}} {\text{-(T}}_{\text{1}} {\text{+(n-1)t}}_{\text{REF}} \text{)}$ This means that the phase error computing module computes a plurality of phase errors per one revolution of the rotary drum 11, as many as the number of occurrences of the drum frequency signal FG_{DR} during a one period of the drum phase signal PG_{DR}. This number is indicated by n in the formula (2) and is 8 in Fig. 3.

To accomplish this, the phase error computing module identifies the count data CNT (T1) indicative of an occurrence time T₁ of the phase reference signal D_{REF} from the contents of the FIFO memory 33 by checking the ID flag F_{DT}. Then the phase error computing module successively adds the period reference t_{REF} of the drum frequency signal FG_{DR} to T₁ to provide divisional times T₁, T₁+t_{REF}, T₁+2t_{REF}, ....., and T₁+(n-1)t_{REF} (generally designated by TX in Fig. 3F). The divisional times defines the desired occurrence times of the drum frequency signal FG_{DR}.

Further, checking the drum phase signal PG_{DR} the phase error computing module identifies the count data CNT (t₁) from the FIFO memory 33 indicative of a reference (first) occurrence time t₁ of the drum frequency signal FG_{DR} that occurred during a high level period of the drum phase signal PG_{DR}. The first occurrence time t₁ is to be compared with the occurrence time T₁ of the phase reference signal D_{REF}, i.e., the first divisional time T₁. So the phase error computing module computes the difference between t₁ and T₁ to obtain a first phase error (t₁-T₁). Using the phase error (t₁-T₁), the drum control data generating module produces new drum control data DT_{SB}.

Then, the phase error computing module identifies the count data CNT (t₂) indicative of a second occurrence time t₂ of the drum frequency signal FG_{DR}. The count data CNT (t₂) is determined by count data CNT of the drum frequency signal FG_{DR} that succeeds the count data CNT (t₁), i.e., count data CNT with ID flag F_{DT} = "10" which the phase and speed control 40 receives from the FIFO memory 33 next time after having received and identified the count data CNT (t₁). The second occurrence time t₂ of the drum frequency signal FG_{DR} is to be compared with (is associated with) the second divisional·time (T₁+t_{REF}). So the phase error computing module computes the difference between t₂ and (T₁+t_{REF}) to obtain a second phase error (t₂-(T₁+t_{REF})). Using the second phase error (t₂-(T₁+t_{REF})), the drum control data generating module updates the control data DT_{SB}.

Thereafter, the phase error computing module similarly computes succeeding phase errors t₃-(T₁+2t_{REF})), t₄-(T₁+3t_{REF}), ..... and tₙ - (T₁+(n-1)t_{REF}) until one revolution of the rotary drum completes. Based on the phase errors, the drum control data DT_{SB} is successively updated to control the phase of the rotary drum 11. When the next (rising edge of the) drum phase signal PG_{DR} occurs, the phase error computing module will repeat the phase error computations for the next revolution of the rotary drum 11.

In summary, the prior art rotary drum controller computes phase errors at the rate of one phase error per one period of the drum phase signal PG_{DR} i.e., per one complete revolution of the rotary drum. At a corresponding slow rate, the prior art rotary drum controller updates (the phase controlling component of) the drum control data DT_{SB} to control the phase of the rotary drum 11. In the invention, the rotary drum controller 30 computes phase errors at the rate of one phase error per one period of the drum frequency signal FG_{DR} that repeatedly and periodically occurs a number of times during one revolution of the rotary drum 11. To state it another way, the rotary drum controller 30 computes a plurality of phase errors per one revolution of the rotary drum 11. Each phase error is determined by the difference between a measured occurrence time of the drum frequency signal FGDR and an associated divisional time that indicates a divisional phase reference. At a corresponding fast rate, the rotary drum controller 30 updates the drum control data DT_{SB} to control the phase of the rotary drum 11.

Therefore, the rotary drum controller of the invention provides improved response of the rotary drum phase control over the prior art. The rotary drum controller of the invention can quickly establish the desired synchronism of the rotary drum with the phase reference signal. Thus, a DAT with the rotary drum controller of the invention can start recording immediately after the muted condition is released.

This concludes the detailed description. However, many modifications and variations of the embodiment will be obvious to a person of ordinal skill in the art within the scope of the claims. For example, in place of the FIFO memory 33, other storage, means such as a random access memory (RAM) and latch circuit may be used to store count data. In the embodiment, the rotary drum controller of the invention has been described as applied to a digital audio tape recorder (DAT). However, the rotary drum controller of the invention can also be applied to any other suitable apparatus with a rotary drum, such as a video tape recorder (VTR, VCR) and a data recorder.

Therefore, the scope of the invention should be limited only by the appended claims.

## Claims

1. A controller for a rotary drum (11), said controller being arranged to receive
(a) a drum frequency signal (FG_{DR}) that occurs periodically in synchronism with the rotation of the rotary drum (11) a predetermined plurality of times during one revolution of the rotary drum (11),
(b) a drum phase signal (PG_{DR}) that occurs once per one revolution when said rotary drum (11) passes a predetermined angular phase, and
(c) a phase reference signal (D_{REF}) for said drum phase signal (PG_{DR}), in which said controller (10) is further arranged to send a drum control signal (S_{DR}) to a driver (43) for driving the rotary drum (11)
**characterized in that** said controller comprises:
- a period reference providing means (in 40) for providing data of a period reference (t_{REF}) for said drum frequency signal (FG_{DR});
- drum frequency signal occurrence time measuring means (31; 32-34) for successively measuring occurrence times (t₁, t₂...t₈) of said drum frequency signal (FG_{DR});
- phase reference signal occurrence time measuring means (31; 32; 33-35) for successively measuring occurrence times (T₁, T₂) of said phase reference signal (D_{REF});
- drum frequency signal period measuring means (in 40) coupled to said drum frequency signal occurrence time measuring means (31; 32-34) for measuring a plurality of actual periods of said drum frequency signal (FG_{DR}), each period being determined by the respective time differences (t₂-t₁, t₃-t₂,...) between said sequentially measured occurrence times (t₁, t₂,...t₈) of said drum frequency signal (FG_{DR});
- speed error computing means (in 40) coupled to said drum frequency signal period measuring means (in 40) and said period reference providing means (in 40) for computing a plurality of speed errors each determined by the difference between the period reference (t_{REF}) and a different one of said measured periods of said drum frequency signal;
divisional time determining means coupled to said phase reference signal occurrence time measuring means and said period reference providing means (in 40) for adding successive integer times of said period reference (t_{REF}) to said occurrence times (T₁, T₂) of said phase reference signal (D_{REF}) to determine a plurality of divisional times defining desired occurrence times of the drum frequency signal (FG_{DR});
- phase error computing means (in 40) coupled to said drum frequency signal occurrence time measuring means, said divisional time determining means and said drum phase signal (PG_{DR} ) for computing a plurality of phase errors (ΔT₂), each determined by the difference between a measured occurrence time of said drum frequency signal (FG_{DR}) and an associated divisional time; and
- control signal updating means coupled to said speed error computing means and said phase error computing means for updating said drum control signal (S_{DR}) based on each of said speed errors and each of said phase errors.

2. The controller according to claim 1, wherein the drum frequency signal occurrence time measuring means, the phase reference signal occurrence time measuring means and the drum frequency period measuring means, the speed error computing means and the phase error computing means are implemented by micro-computer means.

3. The controller according to claim 2, wherein said microcomputer means includes a counter (32) for counting the drum frequency occurrence time and the phase reference signal occurrence time and a first-in-first-out (FIFO) memory (33), which is arranged to sequentially store count data from said counter (32), said FIFO memory being addressed in accordance with a rising edge of the drum frequency signal (FG_{DR}) or falling edge of said phase reference signal (D_{REF}).

4. The controller according to one of the preceding claims, wherein said phase error computing means is computing a number of phase errors and said speed error computing means is computing a number of speed errors per one revolution of the rotary drum (11) as many as the number of occurrences of the drum frequency signal (FG_{DR}) during one period of the drum phase signal (PG_{DR}).

## Patentansprüche

1. Kopftrommel-Steuervorrichtung (11), die so ausgebildet ist, daß sie folgendes empfängt:
(a) ein Trommelfrequenzsignal (FG_{DR}), das periodisch synchron mit der Drehung der Kopftrommel (11) mehrmals während einer Umdrehung der Kopftrommel (11) auftritt;
(b) ein Trommelphasensignal (PG_{DR}), das einmal pro Umdrehung auftritt, wenn die Kopftrommel (11) eine vorgegebene Winkelphase durchläuft; und
(c) ein Phasenbezugssignal (D_{REF}) für das Trommelphasensignal (PG_{DR}), wobei die Steuervorrichtung (10) ferner so ausgebildet ist, daß sie ein Trommelsteuersignal (S_{DR}) an einen Treiber (43) zum Betreiben der Kopftrommel (11) liefert;
**dadurch gekennzeichnet,** daß die Steuervorrichtung folgendes aufweist:
- eine Bezugsperiode-Erstelleinrichtung (in 40) zum Erstellen von Daten zu einer Bezugsperiode (t_{REF}) für das Trommelfrequenzsignal (FG_{DR}) ;
- eine Trommelfrequenzsignal-Auftrittszeitpunkt-Meßeinrichtung (31; 32 - 34) zum aufeinanderfolgenden Messen der Auftrittszeitpunkte (t₁, t₂ ..., t₈) des Trommelfrequenzsignals (FG_{DR}) ;
- eine Phasenbezugssignal-Auftrittszeitpunkt-Meßeinrichtung (in 40) zum aufeinanderfolgenden Messen der Auftrittszeitpunkte (T₁, T₂) des Phasenbezugssignals (D_{REF});
- eine Trommelfrequenzsignalperiode-Meßeinrichtung (in 40), die mit der Trommelfrequenzsignal-Auftrittszeitpunkt-Meßeinrichtung (31; 32 - 34) verbunden ist, um mehrere tatsächliche Perioden des Trommelfrequenzsignals (FG_{DR}) zu messen, wobei jede Periode durch die jeweilige Zeitdifferenz (t₂ - t₁, t₃ - t₂, ...) zwischen den aufeinanderfolgend gemessenen Auftrittszeitpunkten (t₁, t₂ ..., t₈) des Trommelfrequenzsignals (FG_{DR}) bestimmt ist;
- eine Drehzahlabweichungs-Berechnungseinrichtung (in 40), die mit der Trommelfrequenzsignalperiode-Meßeinrichtung (in 40) und der Bezugsperiode-Erstelleinrichtung (in 40) verbunden ist, um mehrere Drehzahlabweichungen zu berechnen, von denen jede durch die Differenz zwischen der Bezugsperiode (t_{REF}) und einer anderen der Meßperioden des Trommelfrequenzsignals bestimmt ist;
- eine Teilzeit-Bestimmungseinrichtung, die mit der Phasenbezugssignal-Auftrittszeitpunkt-Meßeinrichtung und der Bezugsperiode-Erstelleinrichtung (in 40) verbunden ist, um aufeinanderfolgende ganzzahlige Vielfache der Bezugsperiode (t_{REF}) zu den Auftrittszeitpunkten (T₁, T₂) des Phasenbezugssignals (D_{REF}) zu addieren, um mehrere Teilzeiten zu bestimmen, die gewünschte Auftrittszeitpunkte des Trommelfrequenzsignals (FG_{DR}) definieren;
- eine Phasenabweichungs-Berechnungseinrichtung (in 40), die mit der Trommelfrequenzsignal-Auftrittszeitpunkt-Meßeinrichtung, der Teilzeit-Bestimmungseinrichtung und dem Trommelphasensignal (PG_{DR}) verbunden ist, um mehrere Phasenabweichungen (Δ_{T2}) zu berechnen, von denen jede durch die Differenz zwischen einem gemessenen Auftrittszeitpunkt des Trommelfrequenzsignals (FG_{DR}) und der zugeordneten Teilzeit bestimmt ist; und
- eine Steuersignal-Aktualisiereinrichtung, die mit der Drehzahlabweichungs-Berechnungseinrichtung und der Phasenabweichungs-Berechnungseinrichtung verbunden ist, um das Trommelsteuersignal (S_{DR}) auf Grundlage jeder der Drehzahlabweichungen und jeder der Phasenabweichungen zu aktualisieren.

2. Steuervorrichtung nach Anspruch 1, bei der die Trommelfrequenzsignal-Auftrittszeitpunkt-Meßeinrichtung, die Phasenbezugssignal-Auftrittszeitpunkt-Meßeinrichtung und die Trommelfrequenzperiode-Meßeinrichtung, die Drehzahlabweichungs-Berechnungseinrichtung und die Phasenabweichungs-Berechnungseinrichtung durch eine Mikrocomputereinrichtung realisiert sind.

3. Steuervorrichtung nach Anspruch 2, bei der die Mikrocomputereinrichtung einen Zähler (32) zum Zählen der Trommelfrequenz-Auftrittszeitpunkte und der Phasenbezugssignal-Auftrittszeitpunkte sowie einen Zuerst-ein-zuerst-aus(FIFO)-Speicher (33) aufweist, der so ausgebildet ist, daß er Zähldaten vom Zähler (32) der Reihe nach einspeichert, wobei der FIFO-Speicher in Übereinstimmung mit der ansteigenden Flanke des Trommelfrequenzsignals (FG_{DR}) oder der fallenden Flanke des Phasenbezugssignals (D_{REF}) adressiert wird.

4. Steuervorrichtung nach einem der vorstehenden Ansprüche, bei der die Phasenabweichungs-Berechnungseinrichtung eine Anzahl von Phasenabweichungen und die Drehzahlabweichungs-Berechnungseinrichtung eine Anzahl von Drehzahlabweichungen pro einer Umdrehung der Kopftrommel (11) berechnet, und zwar mit der Anzahl des Auftretens des Trommelfrequenzsignals (FG_{DR}) während einer Periode des Trommelphasensignals (PG_{DR}).

## Revendications

1. Contrôleur pour un tambour tournant (11), ledit contrôleur étant agencé pour recevoir :
(a) un signal de fréquence de tambour (FG_{DR}) qui se produit périodiquement en synchronisation avec la rotation du tambour tournant (11) une pluralité prédéterminée de fois pendant un tour du tambour tournant (11);
(b) un signal de phase de tambour (PG_{DR}) qui se produit une fois par tour lorsque ledit tambour tournant (11) passe une phase angulaire prédéterminée ; et
(c) un signal de référence de phase (D_{REF}) pour ledit signal de phase de tambour (PG_{DR}), dans lequel ledit contrôleur (10) est en outre agencé pour envoyer un signal de commande de tambour (S_{DR}) à un dispositif d'entraînement (43) pour entraîner le tambour tournant (11),
caractérisé en ce que ledit contrôleur comprend :
un moyen de production de référence de période (en 40) pour produire des données d'une référence de période (t_{REF}) pour ledit signal de fréquence de tambour (FG_{DR}) ;
un moyen de mesure d'instant de survenue de signal de fréquence de tambour (31 ; 32-34) pour mesurer successivement des instants de survenue (t₁, t₂ ... t₈) dudit signal de fréquence de tambour (FG_{DR}) ;
un moyen de mesure d'instant de survenue de signal de référence de phase (31 ; 32 ; 33-35) pour mesurer successivement des instants de survenue (T₁, T₂) dudit signal de référence de phase (D_{REF}) ;
un moyen de mesure de période de signal de fréquence de tambour (en 40) couplé audit moyen de mesure d'instant de survenue de signal de fréquence de tambour (31 ; 32-34) pour mesurer une pluralité de périodes réelles dudit signal de fréquence de tambour (FGDR), chaque période étant déterminée par les différences temporelles respectives (t₂-t₁, t₃-t₂, ...) entre lesdits instants de survenue mesurés séquentiellement (t₁, t₂, ... t₈) dudit signal de fréquence de tambour (FG_{DR}) ;
un moyen de calcul d'erreur de vitesse (en 40) couplé audit moyen de mesure de période de signal de fréquence de tambour (en 40) et audit moyen de production de référence de période (en 40) pour calculer une pluralité d'erreurs de vitesse dont chacune est déterminée par la différence entre la référence de période (t_{REF}) et l'une différente desdites périodes mesurées dudit signal de fréquence de tambour ;
un moyen de détermination d'instant de subdivision couplé audit moyen de mesure d'instant de survenue de signal de référence de phase et audit moyen de production de référence de periode pour additionner des instants entiers successifs ladite référence de période (t_{REF}) auxdits instants de survenue (T₁, T₂) dudit signal de référence de phase (D_{REF}) afin de déterminer une pluralité d'instants de subdivision définissant des instants de survenue souhaités du signal de fréquence de tambour (FG_{DR}) ;
un moyen de calcul d'erreur de phase (en 40) couplé audit moyen de mesure d'instant de survenue de signal de fréquence de tambour, audit moyen de détermination d'instant de subdivision et audit signal de phase de tambour (PG_{DR}) pour calculer une pluralité d'erreurs de phase (ΔT₂) dont chacune est déterminée par la différence entre un instant de survenue mesuré dudit signal de fréquence de tambour (FG_{DR}) et un instant de subdivision associé ; et
un moyen de mise à jour de signal de commande couplé audit moyen de calcul d'erreur de vitesse et audit moyen de calcul d'erreur de phase pour mettre à jour ledit signal de commande de tambour (S_{DR}) sur la base de chacune desdites erreurs de vitesse et de chacune desdites erreurs de phase.

2. Contrôleur selon la revendication 1, dans lequel le moyen de mesure d'instant de survenue de signal de fréquence de tambour, le moyen de mesure d'instant de survenue de signal de référence de phase et le moyen de mesure de période de fréquence de tambour, le moyen de calcul d'erreur de vitesse et le moyen de calcul d'erreur de phase sont mis en oeuvre à l'aide d'un moyen de microcalculateur.

3. Contrôleur selon la revendication 2, dans lequel ledit moyen de microcalculateur inclut un compteur (32) pour compter l'instant de survenue de fréquence de tambour et l'instant de survenue de signal de référence de phase et une mémoire premier entré premier sorti (FIFO) (33) qui est agencée pour stocker séquentiellement des données de comptage provenant dudit compteur (32), ladite mémoire FIFO étant adressée conformément à un front croissant du signal de fréquence de tambour (FG_{DR}) ou à un front décroissant dudit signal de référence de phase (D_{REF}).

4. Contrôleur selon l'une quelconque des revendications précédentes, dans lequel ledit moyen de calcul d'erreur de phase calcule un nombre d'erreurs de phase et ledit moyen de calcul d'erreur de vitesse calcule un nombre d'erreurs de vitesse pour un tour du tambour tournant (11) jusqu'à concurrence du nombre de survenues du signal de fréquence de tambour (FG_{DR}) pendant une période du signal de phase de tambour (PG_{DR}).
